# EUROPÄISCHE PATENTSCHRIFT

(11) **EP 2 324 732 B1**
(45) Veröffentlichungstag und Bekanntmachung des Hinweises auf die Patenterteilung: **24.05.2017**
(21) Anmeldenummer: 10014094.6
(22) Anmeldetag: 29.10.2010
(51) Int. Cl.: A47B 47/02, A47B 96/02, B65G 1/02

(54) **Lagerregal, insbesondere automatisches Kleinteilelager**
Storage rack, in particular automatic small part storage
Rayonnage de stockage, notamment stockage automatique de petites pièces.

(30) Priorität: 20.11.2009 DE 202009015784 U
(43) Veröffentlichungstag der Anmeldung: 25.05.2011
(73) Patentinhaber: Fritz Schäfer GmbH, 57290 Neunkirchen (DE)
(72) Erfinder: Cordes, Ralf, 57299 Burbach (DE)
(74) Vertreter: Grosse, Wolf-Dietrich Rüdiger

(56) Entgegenhaltungen:
- EP-A1- 1 559 345
- DE-B3-102007 056 589
- DE-U1- 20 315 601
- FR-A- 1 439 548

## Beschreibung

Die Erfindung betrifft ein Lagerregal, insbesondere automatisches Kleinteilelager, umfassend vertikal angeordnete vordere und hintere Regalstützen mit an den Regalstützen vorne und hinten befestigten, im Querschnitt C-förmigen, aus einem Profilsteg mit an dessen Enden abgewinkelten Profilflanschen bestehenden, einerseits an der Bedienseite und andererseits am gegenüberliegenden Regalflanschende des Lagerregals vorgesehenen Längstraversen und Querträgern, die an den Längstraversen senkrecht zu diesen angebracht sind und Tragflächen aufweisen.

Bei den im Stand der Technik hinlänglich bekannten Kleinteilelagern, insbesondere automatischen Mehrplatz Kleinteilelagern, werden Kartons mit darin enthaltenen Gütern oder auch nach oben offene Kunststoff- oder Metallbehälter, in denen sich Einzelwaren befinden, sowohl hintereinander als auch nebeneinander liegend in den Regalfächern gelagert.

Die mit den Längstraversen verbundenen Querträger, z.B. Profilböden, stellen dabei die Tragflächen für die Kartons bzw. Behälter bereit.

Zur Anbringung der Querträger an den Längstraversen ist es durch die DE 203 15 601 U1 bekannt geworden, die Querträger einfach auf die Längstraversen aufzulegen. Die Traverse ist dabei im Querschnitt nach Art eines Daches mit nach außen und nach innen abfallenden Flanken ausgebildet, wobei die Querträger bzw. Profilböden sich auf den nach innen abfallenden Flanken abstützen.

Aus der DE 10 2007 056 589 B3 ist eine andere Verbindungsart zwischen den Längstraversen und den Querträgern bekannt. Hier besitzt die im Querschnitt C-förmige, in der Gebrauchslage nach unten offene vorgesehene Längstraverse bzw. der Längsträger eine vertikal verlaufende längere innere Seitenwand mit einer Vielzahl von geschlossenen Öffnungen und eine davon beabstandete kürzere äußere Seitenwand, die in einem unteren Rand endet. Jeder Querträger hat an mindestens einem Ende ein Paar von Vorsprüngen in einem Abstand und einer Form, die das Einführen in benachbarte Öffnungen des Längsträgers ermöglichen. Wenn die Vorsprünge voll durch die Öffnungen hindurchgesteckt sind, liegt der untere Rand der äußeren Seitenwand des Längsträgers auf den Flächen der freien Enden der Vorsprünge auf.

Dadurch ergibt sich zwar eine drehstabile Verbindung zwischen Längsträger und Querträger, allerdings mit dem Nachteil eines Höhenverlustes zwischen den vertikal übereinander liegenden Regalfächern, da die Querträger auf den Längsträgern aufliegen.

Desweiteren ist es im Stand der Technik bekannt, die Bestückungs- bzw. Bedienungsseite des Lagerregals mit Einführschrägen auszubilden. Wenn das Lagerregal, wie zuvor beschrieben, Querträger aufweist, die den höchsten Punkt des Fachbodens darstellen, ist eine Befestigung der Einfuhrschräge nur an den Querträgern selbst als separates Bauteil möglich, nicht jedoch an den Längstraversen. Die Einfuhrschrägen werden als an den Querträgern nach unten abgebogene Laschen, die mit einer Bohrung versehen sind, ausgebildet. Die Bohrung dient hierbei zur Fixierung der Querträger an der Längstraverse mittels einer Schraube.

Um zu verhindern, dass die Kartons oder Behälter aus dem Regalfach nach hinten herausfallen können, ist es bekannt, an dem von der Bestückungsseite des Regals entfernten, hinteren Ende des Querträgers eine vertikal nach oben abgebogene Lasche als Durchschubsicherung vorzusehen. Der Querträger weist somit unterschiedlich ausgebildete Enden auf.

Durch die unterschiedlichen Enden der Querträger, einerseits mit Einfuhrschräge und andererseits mit Durchschubsicherung, sowie teilweise verschachtelter Querschnittsgeometrie der Traversenprofile, müssen die Querträger in einem aufwendigen Herstellungsverfahren gefertigt werden und verursachen somit höhere Produktionskosten.

Der Erfindung liegt die Aufgabe zugrunde, bei einem Lagerregal der eingangs genannten Art die Längstraversen und die Querträger durch Ausbildung mit einer einfachen Geometrie kostengünstig herzustellen und gleichwohl deren Tragfähigkeit zu steigern sowie auch eine einfache Montage zu ermöglichen.

Diese Aufgabe wird erfindungsgemäß mit den im kennzeichnenden Teil des unabhängigen Anspruchs angegebenen Merkmalen gelöst. Durch den nach unten abgewinkelten, oberen Profilflansch der Längstraverse wird eine permanente Einfuhrschräge bereitgestellt, über die Kartons, Behälter oder dergleichen barrierefrei und einfach auf die sich anschließenden Querträger des Regalfachs geschoben werden können. Die Einfuhrschräge ist damit fest in den Längstraversen integriert, so dass eine zusätzliche Montage eines abgewinkelten oder geneigten Bauteils als Einfuhrschräge, welches einzeln montiert werden müsste, entfällt.

Eine bevorzugte Ausgestaltung der Erfindung sieht vor, dass die Profilstege der Längstraversen mit sich vom abgebogenen oberen Teilabschnitt bis in den geraden unteren Teilabschnitt erstreckenden, schlitzförmigen Öffnungen versehen sind. Dadurch, dass die schlitzförmigen Öffnungen, die zur Aufnahme von Querträgern dienen, im stabilen und durchgehenden Profilsteg angeordnet sind, erfahren die Längstraversen eine nur geringe Schwächung ihres C-förmigen Profilquerschnitts, wodurch deren Durchbiegung bei Belastung wesentlich reduziert und somit die Tragfähigkeit erhöht wird. Damit einhergehend ist weiterhin eine Reduzierung der Wandstärken der Längstraversen möglich, was zu einem Einsparpotential bei den Materialkosten führt.

Ferner ermöglichen die bereits im oberen, abgebogenen Teilabschnitt des Profilsteges beginnenden und somit nach oben hin freiliegenden schlitzförmigen Öffnungen eine nachträgliche, d.h. nach der Montage und Verbindung der Regalstützen mit den Längstraversen, Einbringung der Querträger des Regals in die schlitzförmigen Öffnungen, nämlich durch einfaches Einstecken.

Dazu sind die Querträger erfindungsgemäß U- / C-förmig oder dergleichen profiliert ausgebildet und ihre Seitenwangen sind am vorderen und am hinteren Ende des Querträgers mit vertikal verlaufenden Einhakausnehmungen zur Verbindung mit den schlitzförmigen Öffnungen der Längstraversen versehen. Eine die beiden Seitenwangen verbindende Stegfläche bildet dabei die Tragauflage für die einzulagernden Kartons bzw. Behälter. Über die Einhakausnehmungen, die nach dem Eintauchen in die schlitzförmigen Öffnungen den Profilsteg im inneren der C-förmigen Längstraverse hintergreifen, ist der Querträger sowohl in Längs- als auch in Querrichtung bewegungssicher in den schlitzförmigen Öffnungen der Längstraversen arretiert. Die schlitzförmigen Öffnungen sind hierbei in regelmäßigen Abständen, d.h. im Rastermaß in den Längstraversen vorgesehen, wobei das Rastermaß auf die Breite der Querträger und somit dem sich daraus ergebenden Abstand der Einhakausnehmungen voneinander abgestimmt ist.

Die Höhe der vertikalen Einhakausnehmungen in den Seitenwangen der Querträger ist so gewählt, dass nach dem Einlegen bzw. Einhaken des Querträgers dieser bündig auf einer Höhe mit den Längstraversen liegt, wodurch die gesamte Höhe des Regalfachs für die Einlagerung von Gütern zur Verfügung steht.

Eine weitere vorteilhafte Ausgestaltung der Erfindung sieht vor, dass die hintere Längstraverse auf der Schrägfläche ihres nach unten geneigten Profilflansches mit einer nach oben hin vorkragenden Durchschubsicherung versehen ist. Die hintere, der Bedienseite des Lagerregals gegenüberliegende Längstraverse ist von ihrer Geometrie her baugleich mit der vorderen Längstraverse, hier auf der Einfuhrschräge lediglich mit einer fest oder lösbar verbundenen Durchschubsicherung, beispielsweise ein Winkel oder dergleichen anschraubbares oder anschweissbares Bauteil, versehen. Damit wird verhindert, dass beim Befüllen der Regalfächer hintereinander eingeschobene Kartons bzw. Behälter am Ende des Regalfachs nach hinten herausfallen können.

Eine alternative Ausgestaltung der Erfindung sieht zur Bereitstellung einer Durchschubsicherung vor, dass der obere Profilflansch der hinteren Längstraverse horizontal und parallel zum unteren Profilflansch verläuft und an seinem freien Ende senkrecht nach oben hin abgewinkelt ist. Somit ist die Durchschubsicherung integraler Bestandteil der das hintere Regalfachende markierenden Längstraverse, wodurch die Montage separater und einzeln auf den Längstraversen zu montierender Durchschubsicherungen entfällt.

Weitere Einzelheiten und Vorteile der Erfindung ergeben sich aus den Ansprüchen und der nachfolgenden Beschreibung von in den Zeichnungen dargestellten Ausführungsbeispielen des Gegenstandes der Erfindung. Es zeigen:
- Fig. 1: als Einzelheit eines Lagerregals ausschnittsweise eine C-förmige Längstraverse, die einerseits über ihren Profilsteg mit einer Regalstütze verbunden ist und in die andererseits in dem Profilsteg ein die Lagerfläche bildender Querträger eingehakt ist;
- Fig. 2: in einem Querschnitt eine vordere und eine hintere, jeweils baugleiche C-förmige Längstraverse eines Lagerregals, die über einen in den Längstraversen eingehakten Querträger miteinander verbunden sind;
- Fig. 3: eine Darstellung wie gemäß Fig. 2 mit demgegenüber anders ausgebildeter, hinterer Längstraverse, wobei diese Ausführung nicht Teil der Erfindung ist;
- Fig. 4: als Einzelheit in einer perspektivischen Ansicht von der dem Regalfach zugewandten Rückseite her gesehen eine Längstraverse mit in ihrem Profilsteg ausgebildeten, schlitzförmigen Öffnungen, in die ein Querträger eingehakt ist;
- Fig. 5: die Längstraverse gemäß Fig. 4 in einer perspektivischen Ansicht von der Vorderseite her gesehen;

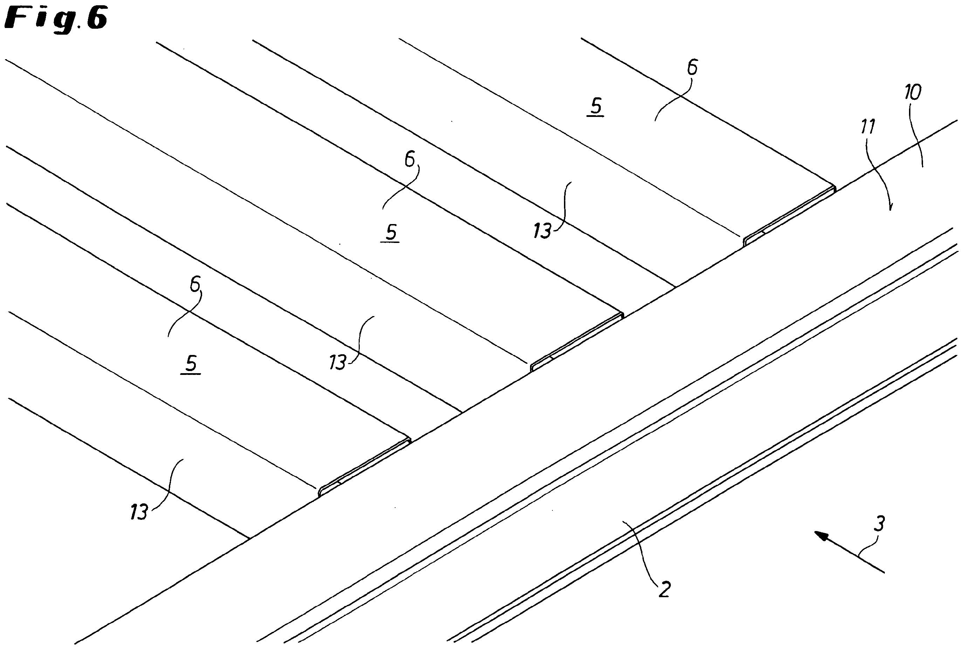

- Fig. 6: in einer perspektivischen Darstellung eine Längstraverse mit mehreren darin eingehakten Querträgern; und

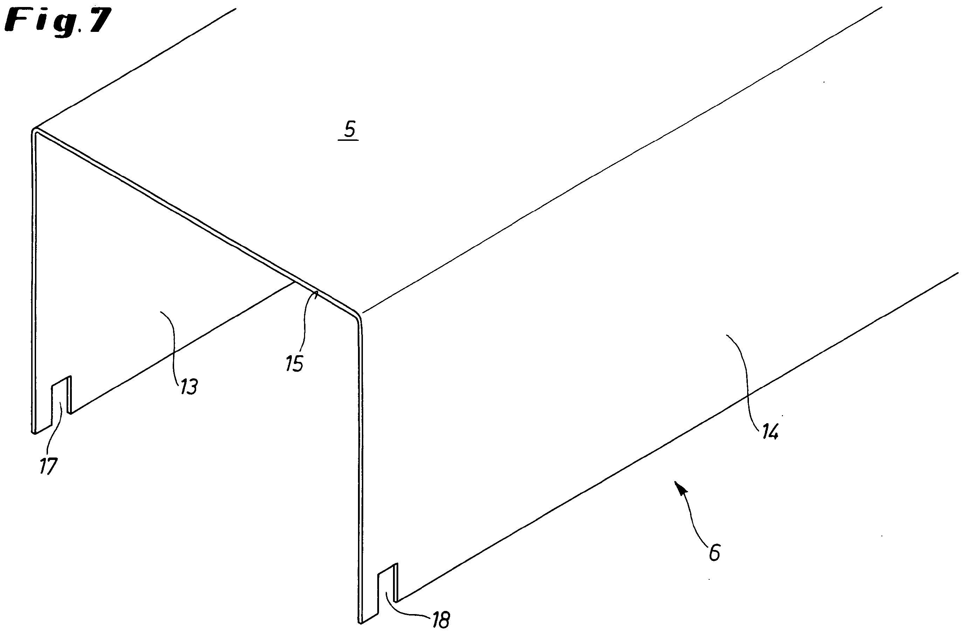

- Fig. 7: in einer perspektivischen Teilansicht ein stirnseitiges Ende eines Querträgres.

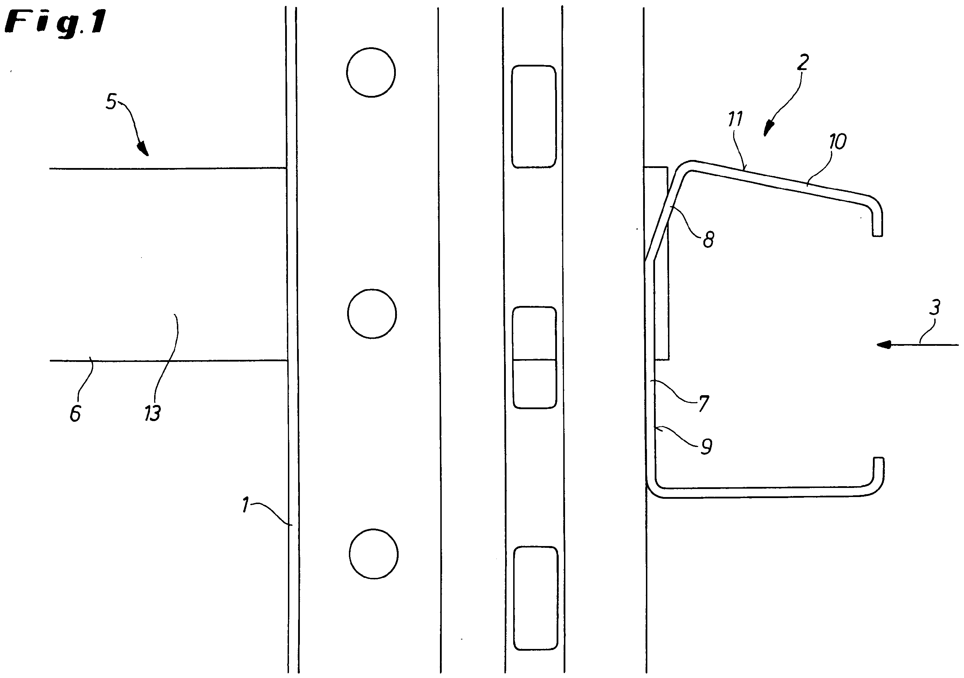

Die Fig. 1 zeigt eine Regalstütze 1 eines hier nicht näher dargestellten Lagerregals, insbesondere eines automatischen Kleinteilelagers, zur Einlagerung von Kartons und befüllten Behältern, das üblicherweise aus vier Regalstützen 1 besteht, wobei die beiden vorderen und die beiden hinteren Regalstützen 1 jeweils über horizontale Längstraversen 2 miteinander verbunden sind.

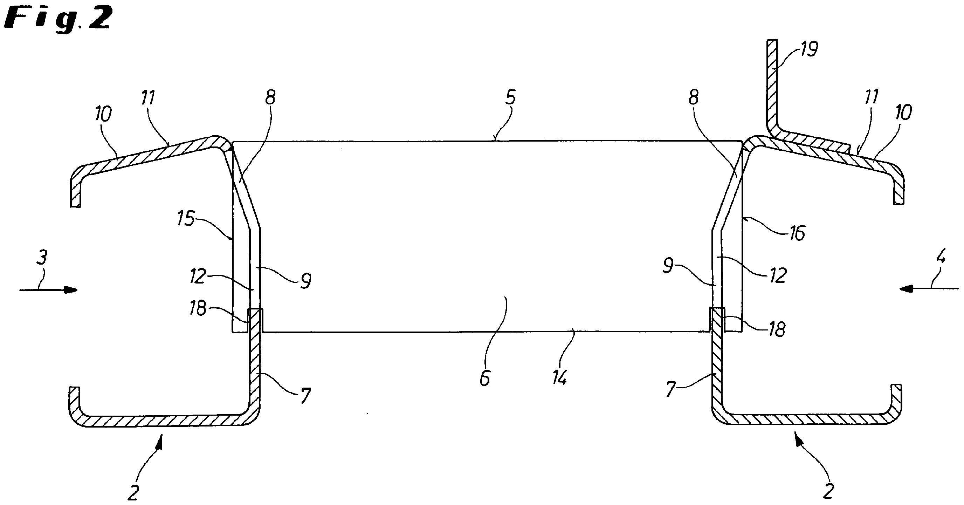

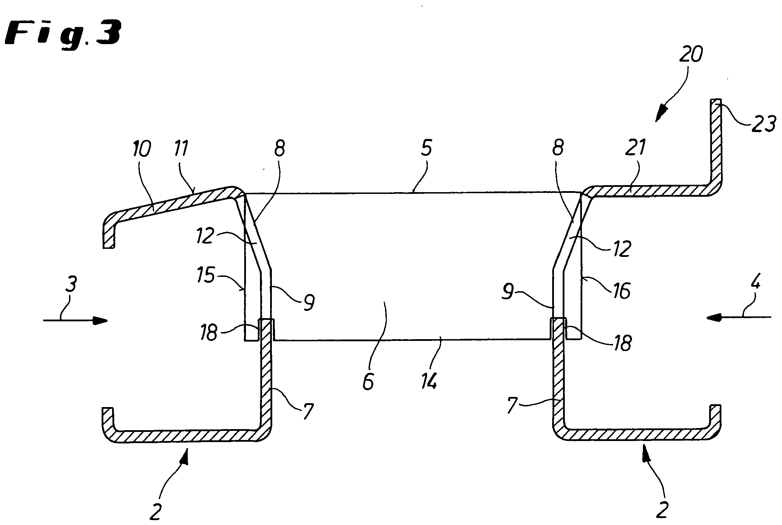

Die somit parallel gegenüberliegend angeordneten Längstraversen 2 befinden sich dabei einerseits an der Bedienseite 3 und andererseits am Regalfachende 4 des Lagerregals, wobei sie über die Lagerfläche 5 bildenden Querträgern 6 miteinander verbunden sind (vgl. hierzu Fig. 2 und 3).

Die Längstraversen 2 besitzen ein im Querschnitt C-förmiges Profil und sind mit einem einen unteren, geraden Teilabschnitt 7 und einen nach außen hin abgebogenen, oberen Teilabschnitt 8 aufweisenden Profilsteg 9 ausgebildet. Die Längstraverse kann an ihren Enden mit Hakenlaschen versehen sein und mit diesen in die Regalstützen 1 eingehängt werden; optional ist der gerade Teilabschnitt 7 wie dargestellt mit der vertikalen Regalstütze 1 verbunden, beispielsweise über eine Schrauben/Mutternkombination. Dem gebogenen oberen Teilabschnitt 8 schließt sich der obere Profilflansch 10 mit einer nach außen abwärts geneigten Schrägfläche 11 an. Die Schrägfläche 11 stellt hierbei eine integrierte Einfuhrschräge dar, die ein einfaches und leichtes Aufschieben der Kartons bzw. Behälter auf die Lagerfläche 5 der Querträger 6 und somit in das Regalfach ermöglicht.

Im Profilsteg 9 der Längstraverse 2 sind schlitzförmige Öffnungen 12 ausgebildet, die sich vom abgebogenen oberen Teilabschnitt 8 bis in den unteren geraden Teilabschnitt 7 erstrecken und zur Aufnahme der Querträger 6 dienen.

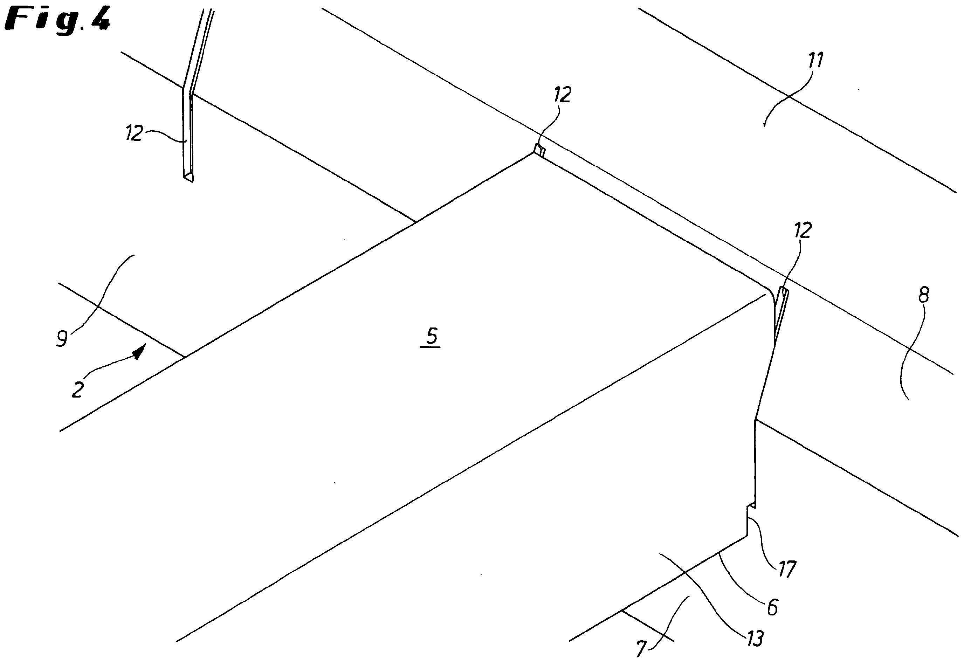

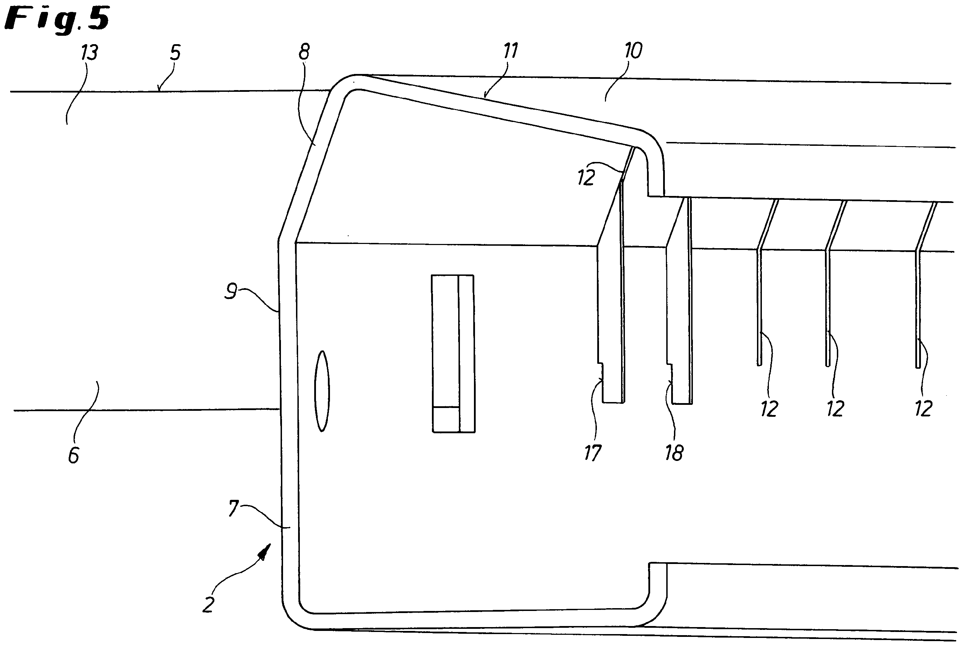

Die Querträger 6 sind im Profil U-förmig ausgebildet und ihre senkrechten Seitenwangen 13, 14 sind an den beiden stirnseitigen Enden 15, 16 mit vertikal verlaufenden Einhaköffnungen 17, 18 versehen, die nach dem Eintauchen in die schlitzförmigen Öffnungen 12 der Längstraversen 2 den Profilsteg 9 hintergreifen. Die Querträger 6 werden somit in Längsrichtung zwischen den beiden Längstraversen 2 bewegungssicher festgelegt (vgl. hierzu insbesondere die Fig. 4 und 5).

Gleichzeitig werden die Seitenwangen 13, 14 in vertikaler Richtung von den schlitzförmigen Öffnungen 12 eingehaust, womit eine Verschiebung der Querträger 6, insbesondere bei Belastung, zur Seite hin wirkungsvoll verhindert wird.

Die solchermaßen mit den Längstraversen 2 verbundenen Querträger 6, die in regelmäßigem Abstand parallel zueinander verlaufend in jedem Regalfach angeordnet sind, versteifen gleichzeitig auch die Längstraversen 2, was bewirkt, dass diese sich unter Last nicht verdrehen. Die Anbringung von zusätzlichen Druckstäben zur Stabilisierung der Längstraversen 2 ist somit nicht mehr erforderlich.

Die Lagerfläche 5 liegt nach dem Einhaken der Querträger 6 auf einem Höhenniveau mit den Längstraversen 2, so dass die komplette Höhe eines Regalfachs für die Einlagerung von Gütern zur Verfügung steht.

Dadurch, dass die schlitzförmigen Öffnungen 12 bereits im oberen, abgebogenen Teilabschnitt des Profilsteges 9 ausgebildet sind, können die gegenüberliegenden Längstraversen 2 direkt bei der Montage des Lagerregals mit den Regalstützen 1 verschraubt und abschließend die Querträger 6 von oben her in die Längstraversen 2 eingehakt werden.

Wie der Fig. 2 zu entnehmen ist, weist die am Regalfachende 4 angeordnete Längstraverse 2 eine mit der Schrägfläche 11 verbundene, nach oben hin vorkragende Durchschubsicherung 19 in Form eines Winkels auf. Damit wird verhindert, dass die einzulagernden Güter im Regalfach zu weit durchgeschoben werden und in der Folge am Regalfachende nach hinten herausfallen.

Bei einer in Fig. 3 dargestellten alternativen Ausführung einer Durchschubsicherung der hinteren Längstraverse 20 verläuft der obere Profilflansch 21 horizontal und parallel zum unteren Profilflansch 22 und sein freies Ende 23 ist senkrecht nach oben hin abgewinkelt, wodurch ebenfalls eine Durchschubsicherung bereit gestellt wird.

### Bezugszeichenliste:

- 1: Regalstütze
- 2: Längstraverse
- 3: Bedienseite
- 4: Regalfachende
- 5: Lagerfläche
- 6: Querträger
- 7: unterer Teilabschnitt
- 8: oberer Teilabschnitt
- 9: Profilsteg
- 10: oberer Profilflansch
- 11: Schrägfläche
- 12: schlitzförmige Öffnung
- 13: Seitenwange
- 14: Seitenwange
- 15: vorderes Ende (Querträger)
- 16: hinteres Ende (Querträger)
- 17: Einhakausnehmung
- 18: Einhakausnehmung
- 19: Durchschubsicherung
- 20: Längstraverse
- 21: oberer Profilflansch
- 22: unterer Profilflansch
- 23: freies abgewinkeltes Ende (oberer Profilflansch); Durchschubsicherung

## Patentansprüche

1. Lagerregal, insbesondere automatisches Kleinteilelager, umfassend vertikal angeordnete vordere und hintere Regalstützen (1) mit an den Regalstützen vorne und hinten befestigten, im Querschnitt C-förmigen, aus einem Profilsteg (9) mit an dessen Enden abgewinkelten Profilflanschen (10) bestehenden, einerseits an der Bedienseite (3) und anderseits am gegenüberliegenden Regalfachende (4) des Lagerregals vorgesehenen Längstraversen (2) und Querträgern (6), die an den Längstraversen (2) senkrecht zu diesen angebracht sind und Tragflächen aufweisen,
**dadurch gekennzeichnet,**
**dass** die Längstraversen (2) nach außen seitlich offen sind, und dass die Profilstege (9) über die Tragfläche (5) bildenden Querträgern (6) miteinander verbunden sind, und mit einem einen unteren, geraden Teilabschnitt (7) und einen nach außen hin abgebogenen, oberen Teilabschnitt (8) aufweisenden Profilsteg (9) ausgebildet sind, wobei sich dem gebogenen oberen Teilabschnitt (8) der in der Einbaulage obere Profilflansch (10) mit einer nach außen abwärts geneigten Schrägfläche (11) anschließt.

2. Lagerregal nach Anspruch 1,
**dadurch gekennzeichnet,**
**dass** die Profilstege (9) der Längstraversen (2) mit sich vom abgebogenen oberen Teilabschnitt (8) bis in den geraden unteren Teilabschnitt (7) erstreckenden, schlitzförmigen Ausnehmungen (12) versehen sind.

3. Lagerregal nach Anspruch 2,
**dadurch gekennzeichnet,**
**dass** die schlitzförmigen Öffnungen (12) in regelmäßigen Abständen zueinander angeordnet sind.

4. Lagerregal nach einem der Ansprüche 1 bis 3,
**dadurch gekennzeichnet,**
**dass** die Querträger (6) U- / C-förmig oder dergleichen profiliert ausgebildet sind und ihre Seitenwangen (13, 14) am vorderen und am hinteren Ende (15, 16) des Querträgers (6) vertikal verlaufende Einhakausnehmungen (17, 18) zur Verbindung mit den schlitzförmigen Öffnungen (12) der Längstraversen (2, 20) aufweisen.

5. Lagerregal nach einem der Ansprüche 1 bis 4,
**dadurch gekennzeichnet,**
**dass** die hintere Längstraverse (2) auf der Schrägfläche (11) ihres nach unten geneigten Profilflansches (10) mit einer nach oben hin vorkragenden Durchschubsicherung (19) versehen ist.

6. Lagerregal nach einem der Ansprüche 1 bis 5,
**dadurch gekennzeichnet,**
**dass** der obere Profilflansch (21) der hinteren Längstraverse (20) horizontal und parallel zum unteren Profilflansch (22) verläuft und an seinem freien Ende (23) nach oben hin abgewinkelt ist.

## Claims

1. A storage rack, particularly an automated small parts store, comprising vertically disposed front and rear shelf supports (1) with longitudinal beams (2) and crossmembers (6) which are fastened at the front and the rear to the shelf supports, have a C-shaped cross-section, consist of a profile web (9) with angled profile flanges (10) on the ends thereof, and are provided both on the operating side (3) and on the opposite end of the storage rack shelf compartment (4), which are attached perpendicularly to the longitudinal beams (2) and offer support surfaces,
**characterized in**
**that** the longitudinal beams (2) are outwardly open at the sides, and that the profile webs (9) are connected to each other via the crossmembers (6) that form the support surface (5), and are constructed with a profile web (9) having a straight lower subsection (7) and an outwardly bent upper subsection (8), wherein in the installed position the upper profile flange (10) with an inclined surface (11) that is inclined downwards to the outside adjoins the bent upper subsection (8).

2. The storage rack according to claim 1,
**characterised in**
**that** the profile webs (9) of the longitudinal beams (2) are furnished with slot-like recesses (12) that extend from the bent upper subsection (8) into the straight lower subsection (7).

3. The storage rack according to claim 2,
**characterised in**
**that** the slot-like openings (12) are arranged at regular distances from each other.

4. The storage rack according to any one of claims 1 to 3,
**characterised in**
**that** the crossmembers (6) have a U-/C-shaped or similar profile, and the sidewalls (13, 14) thereof have vertically aligned hooking cutaways (17, 18) at the front and rear ends (15, 16) of the crossmember (6) for connecting with the slot-like openings (12) of the longitudinal beams (2, 20).

5. The storage rack according to any one of claims 1 to 4,
**characterised in**
**that** the inclined surface (11) of the downward sloping profile flange (10) on the rear longitudinal beam (2) is provided with an upwardly projecting push-through protection (19).

6. The storage rack according to any one of claims 1 to 5,
**characterised in**
**that** the upper profile flange (21) of the rear longitudinal beam (20) extends horizontally and parallel to the lower profile flange (22) and is angled upwards at its free end (23).

## Revendications

1. Rayon de stockage, notamment de stockage automatique de petites pièces, comprenant des supports de rayon (1) avant et arrière disposés verticalement avec des traverses longitudinales (2) fixées à l'avant et à l'arrière aux supports de rayon, en section en forme de C, composés d'un profilé (9) avec des brides profilées (10) coudées à leurs extrémités, prévus d'une part sur le côté de service (3) et d'autre part sur l'extrémité du compartiment de rayon (4) opposée du rayon de stockage et des supports transversaux (6), qui sont montés sur les traverses longitudinales (2) perpendiculairement à celles-ci et comportent des surfaces de support,
**caractérisé en ce**
**que** les traverses longitudinales (2) sont ouvertes latéralement vers l'extérieur et en ce que les âmes de profilé (9) sont reliées entre elles par les supports transversaux (6) formant la surface de support (5) et sont constituées avec une âme de profilé (9) comportant une partie de section (7) droite inférieure et une partie de section (8) supérieure repliée vers l'extérieur, la bride profilée supérieure (10) avec une surface oblique (11) inclinée vers le bas vers l'extérieur se raccordant dans la position de montage à la partie de section supérieure (8) pliée.

2. Rayon de stockage selon la revendication 1,
**caractérisé en ce**
**que** les âmes de profilé (9) des traverses longitudinales (2) sont dotées d'évidements (12) en forme de fente, s'étendant de la partie de section (8) supérieure recourbée jusque dans la partie de section (7) inférieure droite.

3. Rayon de stockage selon la revendication 2,
**caractérisé en ce**
**que** les ouvertures en forme de fente (12) sont disposées à des intervalles réguliers les unes par rapport aux autres.

4. Rayon de stockage selon l'une quelconque des revendications 1 à 3,
**caractérisé en ce**
**que** les supports transversaux (6) sont constitués profilés en forme de U/de C ou de forme analogue et leurs parois latérales (13, 14) comportent sur les extrémités avant et arrière (15, 16) du support transversal (6) des évidements d'accrochage (17, 18) passant verticalement pour relier les ouvertures (12) en forme de fente des traverses longitudinales (2, 20).

5. Rayon de stockage selon l'une quelconque des revendications 1 à 4,
**caractérisé en ce**
**que** la traverse longitudinale arrière (2) est dotée sur la surface oblique (11) de sa bride profilée (10) inclinée vers le bas d'une sécurité de passage (19) en saillie vers le haut.

6. Rayon de stockage selon l'une quelconque des revendications 1 à 5,
**caractérisé en ce**
**que** la bride profilée supérieure (21) de la traverse longitudinale arrière (20) passe horizontalement et parallèlement à la bride profilée inférieure (22) et est repliée vers le haut sur son extrémité libre (23).
